# EUROPÄISCHE PATENTANMELDUNG

(11) **EP 3 751 173 A1**
(43) Veröffentlichungstag der Anmeldung: **16.12.2020**
(21) Anmeldenummer: 20179664.6
(22) Anmeldetag: 12.06.2020
(51) Int. Cl.: F16H 35/00, F16H 49/00

(54) **VERSTELLVORRICHTUNG FÜR EINEN VERBRENNUNGSMOTOR**

(30) Priorität: 12.06.2019 LU 101266
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Verfahren zum Herstellen einer Verstellvorrichtung für einen Verbrennungsmotor, die ein Zugmittelrad sowie ein Dreiwellengetriebe mit einem ersten Getriebeantrieb, einem zweiten Getriebeantrieb und einem Getriebeabtrieb aufweist. Das Verfahren zeichnet sich dadurch aus, dass das Zugmittelrad wahlweise in einer von wenigstens zwei axial voneinander beabstandeten Ankoppelaufnahmen mit dem ersten Getriebeantrieb drehfest verbunden wird, oder dass das Zugmittelrad derart asymmetrisch ausgebildet ist, dass in Abhängigkeit von seiner Einbau-Ausrichtung jeweils eine unterschiedliche axiale Zugmittelradposition erzielbar ist, und zum Realisieren einer von wenigstens zwei unterschiedlichen möglichen axialen Zugmittelradpositionen wahlweise mit einer ersten Ausrichtung relativ zu dem ersten Getriebeantrieb oder mit einer von der ersten Ausrichtung verschiedenen zweiten Ausrichtung relativ zu dem ersten Getriebeantrieb drehfest mit dem ersten Getriebeantrieb verbunden wird, oder dass ein weiteres Zugmittelrad vorhanden ist, das von dem Zugmittelrad verschieden ist, wobei zum Realisieren einer von wenigstens zwei unterschiedlichen möglichen axialen Zugmittelradpositionen wahlweise das Zugmittelrad oder das weitere Zugmittelrad mit dem ersten Getriebeantrieb drehfest verbunden wird oder wobei wahlweise das Zugmittelrad oder das weitere Zugmittelrad in einer von wenigstens zwei axial voneinander beabstandeten Ankoppelaufnahmen mit dem ersten Getriebeantrieb drehfest verbunden wird.

## Beschreibung

Die Erfindung betrifft ein Verfahren zum Herstellen einer Verstellvorrichtung für einen Verbrennungsmotor, die ein Zugmittelrad sowie ein Dreiwellengetriebe mit einem ersten Getriebeantrieb, einem zweiten Getriebeantrieb und einem Getriebeabtrieb aufweist.

Die Erfindung betrifft außerdem eine Verstellvorrichtung für einen Verbrennungsmotor, die ein Zugmittelrad sowie ein Dreiwellengetriebe mit einem ersten Getriebeantrieb, einem zweiten Getriebeantrieb und einem Getriebeabtrieb aufweist.

Die Erfindung betrifft darüber hinaus einen Nockenwellenversteller. Die Erfindung betrifft des Weiteren eine Vorrichtung zum Einstellen des Expansionshubes und/oder des Verdichtungsverhältnisses eines Verbrennungsmotors mit einer solchen Verstellvorrichtung.

Aus DE 10 2011 004 075 A1 ist ein Wellgetriebe mit mindestens einem Hohlrad mit einer Innenverzahnung, einem innerhalb des Hohlrads angeordneten, flexiblen Stirnrad mit einer Außenverzahnung und einem innerhalb des Stirnrads angeordneten Wellengenerator zum Biegen des Stirnrads in Radialrichtung bekannt. Zwischen dem Hohlrad und dem Stirnrad ist an zwei gegenüberliegenden Stellen des Stirnrads eine drehmomentübertragende Verbindung hergestellt, wobei der Wellengenerator einen Ring mit elliptischem Außenumfang und ein auf dem Außenumfang angebrachtes elliptisch verformtes Lager umfasst. Das Stirnrad ist beidseitig durch jeweils einen Deckel axial abgestützt.

Aus DE 20 2015 009 214 U1 ist ein Wellgetriebe mit einem Wellengenerator, einem durch diesen verformbaren flexiblen, außenverzahnten Getriebebauteil, sowie mindestens einem mit dem flexiblen, außenverzahnten Getriebebauteil kämmenden innenverzahnten Getriebebauteil bekannt. Das flexible, außenverzahnte Getriebebauteil weist eine, bezogen auf dessen mechanisch nicht belasteten Zustand, unrunde Grundform auf. Das Wellgetriebe kann als Stellgetriebe eines elektrischen Nockenwellenverstellers ausgebildet sein.

Aus DE 10 2013 216 183 A1 ist eine Verstelleinrichtung, insbesondere zur Verstellung einer Nockenwelle, umfassend eine Antriebswelle, eine Abtriebswelle und ein zwischen der Antriebswelle und der Abtriebswelle geschaltetes Wellgetriebe mit einem Wellengenerator, einem elastisch verformbaren Element und einem Hohlrad bekannt. Eine elementseitige Außenverzahnung steht mit einer hohlradseitigen Innenverzahnung in Eingriff, wobei das elastisch verformbare Element drehfest gelagert ist und das Hohlrad mit der Abtriebswelle bewegungsgekoppelt ist. Die Verstelleinrichtung dient insbesondere der Verstellung einer Nockenwelle eines Verbrennungsmotors eines Kraftfahrzeugs.

Aus DE 10 2010 006 392 B3 ist ein Nockenwellenversteller bekannt, der ein Spannungswellengetriebe beinhaltet. Das Spannungswellengetriebe hat wenigstens zwei Eingänge und einen Ausgang, dessen Bewegung aus der Überlagerung der Bewegungen der Eingänge resultiert, wobei einer der Eingänge zum Ausführen einer Hauptbewegung ausgebildet ist und der andere Eingang zum Ausführen einer Verstellbewegung dient, welche die Phasenlage des Ausgangs relativ gegenüber der Phasenlage des die Hauptbewegung ausführenden Eingangs verstellt.

Aus EP 2 282 020 B1 ist ein Nockenwellenversteller zum Variieren der Phasenbeziehung zwischen einer Kurbelwelle und einer Nockenwelle in einem Verbrennungsmotor bekannt, der eine Harmonic-Drive-GetriebeEinheit mit einem Circular Spline und einem Dynamic Spline, einem Flexspline, der in dem Circular Spline und dem Dynamic Spline angeordnet ist, einem Wellengenerator, der in dem Flexspline angeordnet ist, aufweist. Der Nockenwellenversteller weist außerdem einen Rotationsaktuator auf, der mit dem Wellengenerator verbunden ist.

Aus DE 10 2011 116 952 A1 ist ein Mehrgelenkskurbeltrieb einer Brennkraftmaschine, mit einer Mehrzahl von drehbar auf Hubzapfen einer Kurbelwelle gelagerten Koppelgliedern und einer Mehrzahl von drehbar auf Hubzapfen einer Exzenterwelle gelagerten Anlenkpleueln, wobei jedes der Koppelglieder schwenkbar mit einem Kolbenpleuel eines Kolbens der Brennkraftmaschine und einem der Anlenkpleuel verbunden und die Drehwinkelstellung der Exzenterwelle mittels einer Stellvorrichtung innerhalb eines bestimmten Drehwinkelbereichs einstellbar ist, bekannt.

Aus EP 2 022 959 A2 ist eine Vorrichtung zum variablen Einstellen der Kompression bekannt, die einen Mehrgelenkskurbeltrieb aufweist und bei der eine Stellvorrichtung zur Drehwinkelverstellung einer Exzenterwelle eine Hebelanordnung umfasst. Über die Hebelanordnung kann die Exzenterwelle gedreht und damit eine gewünschte Drehwinkelstellung eingestellt werden.

Es ist daher die Aufgabe der vorliegenden Erfindung, ein flexibles Verfahren anzugeben, das das Herstellen einer für die jeweils vorliegenden Ankopplungsanforderungen eines Verbrennungsmotors passenden Verstellvorrichtung ermöglicht.

Die Aufgabe wird durch ein Verfahren gelöst, das dadurch gekennzeichnet ist, dass
a. das Zugmittelrad wahlweise in einer von wenigstens zwei axial voneinander beabstandeten Ankoppelaufnahmen mit dem ersten Getriebeantrieb drehfest verbunden wird, oder dass
b. das Zugmittelrad derart asymmetrisch ausgebildet ist, dass in Abhängigkeit von seiner Einbau-Ausrichtung jeweils eine unterschiedliche axiale Zugmittelradposition erzielbar ist, und zum Realisieren einer von wenigstens zwei unterschiedlichen möglichen axialen Zugmittelradpositionen wahlweise mit einer ersten Ausrichtung relativ zu dem ersten Getriebeantrieb oder mit einer von der ersten Ausrichtung verschiedenen zweiten Ausrichtung relativ zu dem ersten Getriebeantrieb drehfest mit dem ersten Getriebeantrieb verbunden wird, oder dass
c. ein weiteres Zugmittelrad vorhanden ist, das von dem Zugmittelrad verschieden ist, wobei zum Realisieren einer von wenigstens zwei unterschiedlichen möglichen axialen Zugmittelradpositionen wahlweise das Zugmittelrad oder das weitere Zugmittelrad mit dem ersten Getriebeantrieb drehfest verbunden wird oder wobei wahlweise das Zugmittelrad oder das weitere Zugmittelrad in einer Ankoppelaufnahme oder in einer von wenigstens zwei axial voneinander beabstandeten n mit dem ersten Getriebeantrieb drehfest verbunden wird.

Es ist eine weitere Aufgabe der vorliegenden Erfindung, eine Verstellvorrichtung für einen Verbrennungsmotor anzugeben, die mit unterschiedlichen Verbrennungsmotoren einsetzbar ist.

Die weitere Aufgabe wird durch eine Verstellvorrichtung gelöst, die dadurch gekennzeichnet ist, dass
a. der erste Getriebeantrieb wenigstens zwei axial voneinander beabstandeten Ankoppelaufnahmen aufweist, wobei das Zugmittelrad wahlweise in einer von den Ankoppelaufnahmen mit dem ersten Getriebeantrieb drehfest verbindbar ist oder verbunden ist, oder dass
b. das Zugmittelrad asymmetrisch ausgebildet ist und zum Realisieren einer von wenigstens zwei unterschiedlichen möglichen axialen Zugmittelradpositionen wahlweise mit einer ersten Ausrichtung relativ zu dem ersten Getriebeantrieb oder mit einer von der ersten Ausrichtung verschiedenen zweiten Ausrichtung relativ zu dem ersten Getriebeantrieb drehfest mit dem ersten Getriebeantrieb verbindbar ist, oder dass
c. ein weiteres Zugmittelrad vorhanden ist, das von dem Zugmittelrad verschieden ist, wobei zum Realisieren einer von wenigstens zwei unterschiedlichen möglichen axialen Zugmittelradpositionen wahlweise das Zugmittelrad oder das weitere Zugmittelrad mit dem ersten Getriebeantrieb drehfest verbindbar ist oder verbunden ist, oder wobei wahlweise das Zugmittelrad oder das weitere Zugmittelrad in einer Ankoppelaufnahme oder in einer von wenigstens zwei axial voneinander beabstandeten Ankoppelaufnahmen mit dem ersten Getriebeantrieb drehfest verbindbar ist oder verbunden ist.

Der Erfindung liegt die Idee zu Grunde, trotz der zumeist sehr unterschiedlichen Anforderungen unterschiedlicher Verbrennungsmotoren hinsichtlich der Geometrie und der Bauraumverhältnisse für die Ankopplung einer Verstellvorrichtung, stets die gleiche Verstellvorrichtung zu verwenden. Hierbei wurde erfindungsgemäß erkannt, dass es besonders vorteilhaft ist, eine Flexibilität hinsichtlich der axialen Zugmittelradposition vorzusehen. Hierdurch wird vorteilhaft erreicht, dass die erfindungsgemäße Verstellvorrichtung mit geringem Aufwand individuell für die Verwendung mit ganz unterschiedlichen Verbrennungsmotoren, beispielsweise als Nockenwellenversteller oder als Vorrichtung zum Einstellen des Expansionshubes und/oder des Verdichtungsverhältnisses eines Verbrennungsmotors, ausgebildet werden kann.

Die erfindungsgemäße Verstellvorrichtung weist ein Dreiwellengetriebe mit einem ersten Getriebeantrieb, einem zweiten Getriebeantrieb und einem Getriebeabtrieb auf.

Zur Verwendung in einem Nockenwellenversteller kann vorteilhaft vorgesehen sein, dass der erste Getriebeantrieb dazu ausgebildet ist, mit der Kurbelwelle eines Verbrennungsmotors, beispielsweise über ein Zugmittelgetriebe, wirkverkoppelt zu werden, während der zweite Getriebeantrieb mit einem elektrischen Antriebsmotor und der Getriebeabtrieb mit der Nockenwelle wirkverkoppelt wird. Durch eine geeignete Ansteuerung des Antriebsmotors können die Steuerzeiten der Ventilsteuerung eines Verbrennungsmotors eingestellt bzw. verstellt werden.

Die erfindungsgemäße Verstellvorrichtung kann zum Antreiben einer Verstellwelle zum Verstellen des Expansionshubes und/oder des Verdichtungsverhältnisses eines Verbrennungsmotors ausgebildet sein. Auch hierbei kann insbesondere vorgesehen sein, dass der erste Getriebeantrieb mit der Kurbelwelle eines Verbrennungsmotors, beispielsweise über ein Zugmittelgetriebe, wirkverkoppelt wird, während der zweite Getriebeantrieb mit einem elektrischen Antriebsmotor und der Getriebeabtrieb mit einer Verstellwelle, insbesondere einer Exzenterwelle, zum Verstellen des Expansionshubes und/oder des Verdichtungsverhältnisses eines Verbrennungsmotors wirkverkoppelt wird.

Das Dreiwellengetriebe kann vorteilhaft als Spannungswellengetriebe ausgebildet sein, was weiter unten noch im Detail erläutert ist. Alternativ kann das Dreiwellengetriebe beispielsweise auch als Planetengetriebe oder als Zykloidgetriebe ausgebildet sein.

Die erfindungsgemäße Verstellvorrichtung weist ein Zugmittelrad auf, das insbesondere als Teil eines Zugmittelgetriebes ausgebildet sein kann. Beispielsweise kann das Zugmittelrad dazu ausgebildet und bestimmt sein, über ein Zugmittel mit der Kurbelwelle eines Verbrennungsmotors wirkverbunden zu werden. Bei einer besonderen Ausführung ist das Zugmittelrad als Kettenrad ausgebildet. Bei einer solchen Ausführung ist beispielsweise eine Ankopplung an die Kurbelwelle eines Verbrennungsmotors mittels einer Steuerkette ermöglicht. Das Zugmittelrad kann insbesondere auch als Doppelkettenrad für die Verwendung einer Duplexkette ausgebildet sein. Alternativ ist es beispielsweise auch möglich, dass das Zugmittelrad als Riemenrad ausgebildet ist. Bei einer besonderen Ausführung ist das Zugmittelrad als Riemenrad für die Verwendung eines Zahnriemens ausgebildet.

Die oben erwähnte Flexibilität hinsichtlich der axialen Zugmittelradposition kann durch unterschiedliche Maßnahmen erreicht werden, wobei es durchaus auch möglich ist, mehrere der Maßnahmen kombiniert einzusetzen. Für die axiale Zugmittelradposition ist letztlich die axiale Ebene entscheidend, in der nach vollständiger Montage das an das Zugmittelrad angekoppelte Zugmittel verläuft.

Bei einer Ausführung, bei der der erste Getriebeantrieb wenigstens zwei axial voneinander beabstandete Ankoppelaufnahmen aufweist, ist eine Flexibilität hinsichtlich der axialen Zugmittelradposition bereits dadurch geschaffen, dass das Zugmittelrad wahlweise in unterschiedlichen Ankopplungsaufnahmen befestigt werden kann.

Alternativ oder zusätzlich kann das Zugmittelrad asymmetrisch ausgebildet sein, so dass in Abhängigkeit von seiner Einbau-Ausrichtung jeweils eine unterschiedliche axiale Zugmittelradposition erzielbar ist, wobei für die Zugmittelradposition, wie bereits erwähnt, die Ebene entscheidend ist, in der letztlich das Zugmittel verläuft. Hierzu kann das Zugmittelrad als außenverzahnte Scheibe ausgebildet sein, die auf einer Seite einen Bund aufweist und die axial an dem ersten Getriebeantrieb anliegend befestigt wird. Je nachdem, ob das Zugmittelrad mit der Bundseite oder mit der bundfreien Seite an dem ersten Getriebeantrieb anliegend befestigt wird, resultiert eine unterschiedliche axiale Zugmittelradposition. Die Asymmetrie des Zugmittelrades kann insbesondere dadurch realisiert sein, dass das Zugmittelrad in Bezug auf die Ebene, in der nach vollständiger Montage das Zugmittel verläuft, nicht spiegelsymmetrisch ausgebildet ist und/oder dass das Zugmittelrad bezüglich einer Rotation, insbesondere bezüglich einer Rotation um 180 Grad, um eine zur Axialrichtung senkrechte Achse nicht rotationssymmetrisch ausgebildet ist.

Die Verwendung eines asymmetrisch ausgebildeten Zugmittelrades ist insbesondere auch in Kombination mit einem ersten Getriebeantrieb, der wenigstens zwei axial voneinander beabstandete Ankoppelaufnahmen aufweist, möglich. Hierdurch wird eine besonders große Flexibilität hinsichtlich der möglichen axialen Zugmittelradpositionen erreicht. Insbesondere können hierbei sogar mehrere unterschiedliche Zugmittelräder vorhanden sein, von denen eines zur Montage ausgewählt werden kann, wodurch die Flexibilität noch weiter erhöht wird. Es ist jedoch durchaus möglich, dass der erste Getriebeantrieb ausschließlich eine einzige Ankoppelaufnahme aufweist, wobei jedoch wenigstens zwei unterschiedliche Zugmittelräder und/oder wenigstens ein asymmetrisches Zugmittelrad zum Realisieren einer von wenigstens zwei unterschiedlichen möglichen axialen Zugmittelradpositionen zur Verfügung stehen.

Ganz allgemein kann, alternativ oder zusätzlich, ein weiteres Zugmittelrad vorhanden sein, das von dem Zugmittelrad verschieden ist, wobei zum Realisieren einer von wenigstens zwei unterschiedlichen möglichen axialen Zugmittelradpositionen wahlweise das Zugmittelrad oder das weitere Zugmittelrad mit dem ersten Getriebeantrieb drehfest verbindbar ist oder verbunden ist. Das Zugmittelrad und das weitere Zugmittelrad können sich beispielsweise hinsichtlich ihrer Form und/oder Größe und/oder ihres Durchmessers und/oder ihrer Zähnezahlen und/oder ihrer axialen Länge und/oder ihrer Symmetrieeigenschaften unterscheiden.

Die Möglichkeit der Auswahl aus mehreren Zugmittelrädern kann vorteilhaft insbesondere auch in Kombination mit einem ersten Getriebeantrieb, der wenigstens zwei axial voneinander beabstandete Ankoppelaufnahmen aufweist, realisiert sein, wodurch eine besonders große Flexibilität hinsichtlich der axialen Zugmittelradposition erreicht wird. Auch ist es alternativ oder zusätzlich möglich, dass die Zugmittelräder, wie oben beschrieben, asymmetrisch ausgebildet sind, um eine noch größere Flexibilität hinsichtlich der möglichen axialen Zugmittelradpositionen zu erreichen.

Das Zugmittelrad (bzw. nach einer entsprechenden Auswahl das weitere Zugmittelrad) kann auf unterschiedliche Weise drehfest an dem ersten Getriebeantrieb befestigt sein. Das Zugmittelrad kann beispielsweise mittels wenigstens einer Schraubverbindung drehfest mit dem ersten Getriebeantrieb verbunden sein. Alternativ oder zusätzlich ist es beispielsweise möglich, dass das Zugmittelrad mittels wenigstens einer Formschlussverbindung, insbesondere mittels einer Steckverbindung, drehfest mit dem ersten Getriebeantrieb verbunden wird und/oder dass das Zugmittelrad mittels wenigstens einer Stoffschlussverbindung, beispielsweise durch Schweißen, Löten oder Kleben, drehfest mit dem ersten Getriebeantrieb verbunden wird. Alternativ kann auch vorgesehen sein, dass das Zugmittelrad mittels einer Reibschlussverbindung drehfest mit dem ersten Getriebeantrieb verbunden wird.

Bei einer besonderen Ausführung weist der erste Getriebeabtrieb wenigstens einen Flansch auf, an dem das Zugmittelrad festgelegt wird. Insbesondere kann der Flansch Gewindebohrungen aufweisen, in die Befestigungsschrauben eingeschraubt werden können. Die Gewindebohrungen können insbesondere axial ausgerichtet auf einem Lochkreis angeordnet sein. Vorzugsweise weist bei einer solchen Ausführung das Zugmittelrad passende Durchgangsbohrungen auf einem identischen Lochkreis auf. Umgekehrt kann beispielsweise auch vorgesehen sein, dass das Zugmittelrad Gewindebohrungen aufweist, während der Flansch Durchgangsbohrungen hat, durch die Befestigungsschrauben geführt und anschließend in die Gewindebohrungen eingeschraubt werden können, um das Zugmittelrad festzulegen.

Wie bereits erwähnt kann das Dreiwellengetriebe vorteilhaft als Spannungswellengetriebe ausgebildet sein.

Das Spannungswellengetriebe kann insbesondere als Ringgetriebe ausgebildet sein. Ein solches Ringgetriebe weist einen Dynamic Spline und einen Circular Spline auf. Der Dynamic Spline und der Circular Spline können als innenverzahnte Hohlräder ausgebildet sein, die mit einem außenverzahnten Flexspline in Zahneingriff stehen. Insbesondere kann vorteilhaft vorgesehen sein, dass der Circular Spline den ersten Getriebeantrieb bildet, während der Dynamic Spline den Getriebeabtrieb bildet, oder umgekehrt. Radial innerhalb des Flexsplines kann ein, insbesondere elliptischer, Wellengenerator rotierbar gelagert sein, der den zweiten Getriebeantrieb bildet. An den zweiten Getriebeantrieb kann die Abtriebswelle eines, insbesondere elektrischen, Antriebsmotors angekoppelt sein.

Bei einer besonderen Ausführung ist der Wellengenerator in axialer und/oder radialer Richtung schwimmend gelagert. Alternativ kann auch vorgesehen sein, dass die Abtriebswelle eines, insbesondere elektrischen, Antriebsmotors innerhalb des Wellengenerators in axialer und/oder radialer Richtung schwimmend gelagert ist. Bei einer besonderen Ausführung ist im Antriebsstrang zwischen einem Antriebsmotor, der den Wellen Generator zu Rotation antreibt, und dem Wellengenerator eine Oldham-Kupplung angeordnet.

Das Spannungswellengetriebe kann beispielsweise auch als Topfgetriebe ausgebildet sein. Hierbei kann vorteilhaft vorgesehen sein, dass der Circular Spline als innenverzahntes Hohlrad ausgebildet ist und den ersten Getriebeantrieb bildet, während der topfförmige Flexspline den Getriebeabtrieb bildet oder mit einer den Abtrieb bildenden Abtriebswelle drehfest verbunden ist.

Ganz allgemein ist ein Verbrennungsmotor besonders vorteilhaft, der eine erfindungsgemäße Verstellvorrichtung aufweist. Hierbei kann, wie bereits erwähnt, vorteilhaft vorgesehen sein, dass die Verstellvorrichtung als Nockenwellenversteller zum Einstellen bzw. Verstellen der Steuerzeiten verwendet wird. Alternativ kann beispielsweise, wie ebenfalls bereits erwähnt, vorteilhaft vorgesehen sein, dass die Verstellvorrichtung zum Antreiben einer Verstellwelle zum Verstellen des Expansionshubes und/oder des Verdichtungsverhältnisses des Verbrennungsmotors verwendet wird.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel einer erfindungsgemäßen Verstellvorrichtung,
- Fig. 2: das erste Ausführungsbeispiel in einer anderen Konfiguration,
- Fig. 3: ein zweites Ausführungsbeispiel einer erfindungsgemäßen Verstellvorrichtung,
- Fig. 4: ein drittes Ausführungsbeispiel einer erfindungsgemäßen Verstellvorrichtung,
- Fig. 5: ein viertes Ausführungsbeispiel einer erfindungsgemäßen Verstellvorrichtung,
- Fig. 6: ein fünftes Ausführungsbeispiel einer erfindungsgemäßen Verstellvorrichtung,
- Fig. 7: ein sechstes Ausführungsbeispiel einer erfindungsgemäßen Verstellvorrichtung, und
- Fig. 8: das sechste Ausführungsbeispiel in einer anderen Konfiguration.

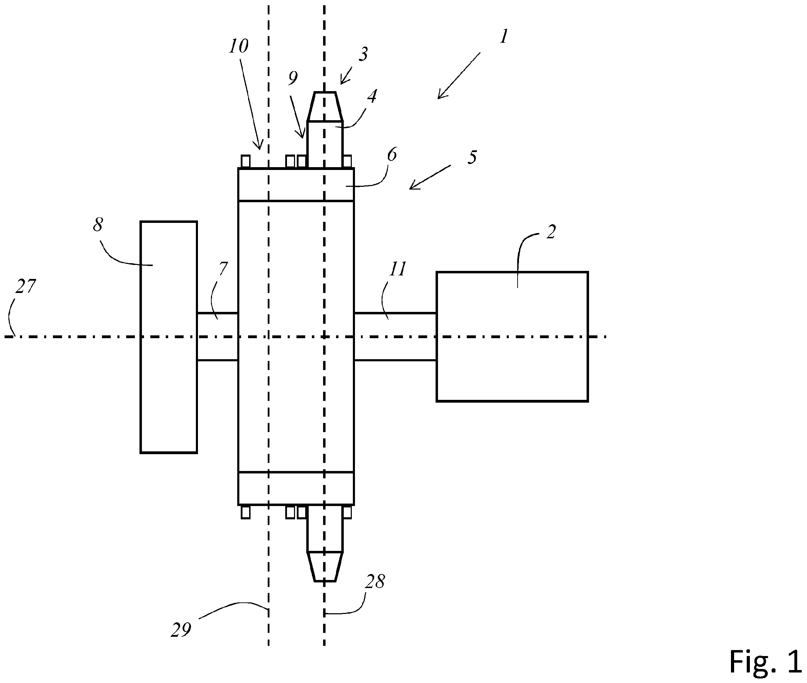

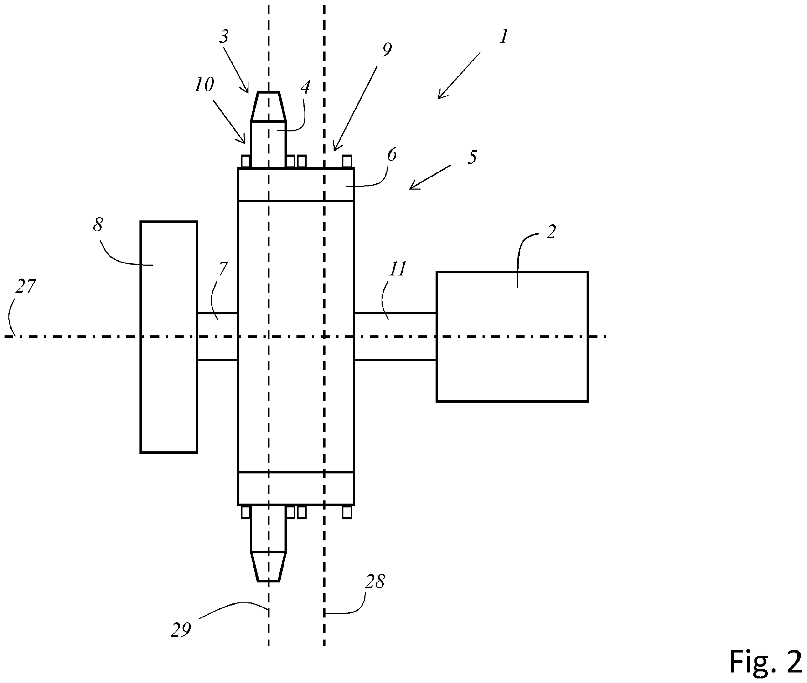

Die Figuren 1 und 2 zeigen ein erstes Ausführungsbeispiel einer erfindungsgemäßen Verstellvorrichtung 1. Die Verstellvorrichtung 1 ist an eine Nockenwelle 2 eines (nicht weiter dargestellten) Verbrennungsmotors angekoppelt. Die Verstellvorrichtung 1 weist ein Zugmittelrad 3 auf, das als Kettenrad 4 ausgebildet ist. Die Verstellvorrichtung 1 weist außerdem ein Dreiwellengetriebe 5 auf. Das Zugmittelrad 3 ist drehfest mit einem ersten Getriebeantrieb 6 des Dreiwellengetriebes 5 verbunden. Das Dreiwellengetriebe 5 weist einen zweiten Getriebeantrieb 7 auf, der an einen elektrischen Antriebsmotor 8 angekoppelt ist. Das Dreiwellengetriebe 5 weist außerdem einen Getriebeabtrieb 11 auf, der drehfest an die Nockenwelle 2 angekoppelt ist.

Die Verstellvorrichtung 1 ist bezüglich der axialen Mittelachse 27 rotationssymmetrisch ausgebildet.

Der erste Getriebeantrieb 6 weist zwei axial voneinander beabstandete Ankoppelaufnahmen 9, 10, nämlich eine erste Ankoppelaufnahme 9 und eine zweite Ankoppelaufnahme 10 auf. Das Zugmittelrad 3 kann wahlweise in der ersten Ankoppelaufnahme 9 drehfest mit dem ersten Getriebeantrieb 6 verbunden sein, was in Figur 1 dargestellt ist, oder in der zweiten Ankoppelaufnahme 10, was in Figur 2 dargestellt ist.

Für die axiale Zugmittelradposition ist letztlich die axiale Ebene 28, 29 entscheidend, in der nach vollständiger Montage das an das Zugmittelrad 3 angekoppelte (nicht dargestellte) Zugmittel verläuft. Wenn das Zugmittelrad 3 in der ersten Ankoppelaufnahme 9 angeordnet ist, befindet sich die axiale Zugmittelradposition in einer ersten axiale Ebene 28. Wenn das Zugmittelrad 3 in der zweiten Ankoppelaufnahme 10 angeordnet ist, befindet sich die axiale Zugmittelradposition in einer zweiten axiale Ebene 29, die von der ersten axiale Ebene 28 axial beabstandet ist.

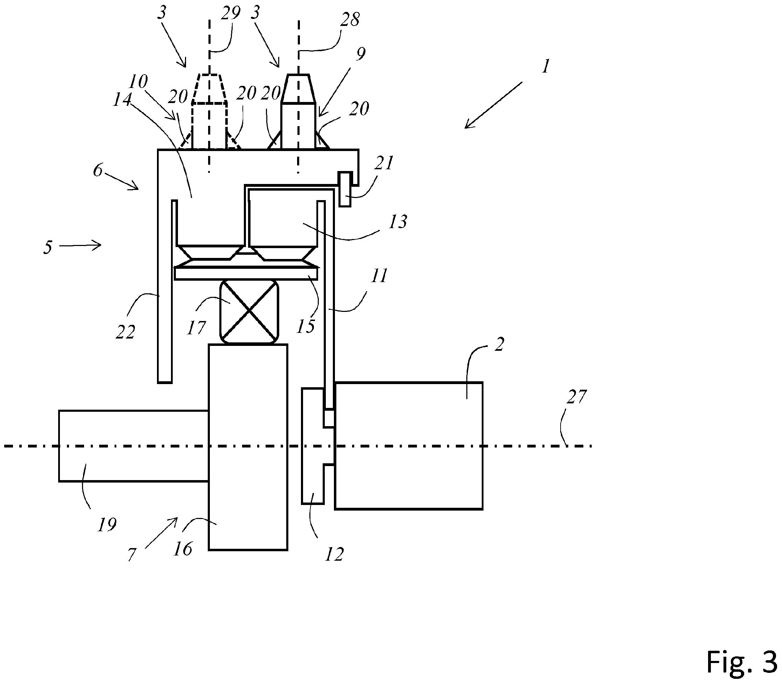

Figur 3 zeigt ein zweites Ausführungsbeispiel einer erfindungsgemäßen Verstellvorrichtung 1, wobei einige rotationssymmetrische Bauteile lediglich hälftig dargestellt sind. Die Verstellvorrichtung 1 ist bezüglich der axialen Mittelachse 27 rotationssymmetrisch ausgebildet.

Das Dreiwellengetriebe 5 ist bei dieser Ausführung als Spannungswellengetriebe in Form eines Ringgetriebes ausgebildet. Der Getriebeabtrieb 11 des Dreiwellengetriebes 5 ist mittels einer Befestigungsschraube 12 drehfest mit einer Nockenwelle 2 eines (nicht weiter dargestellten) Verbrennungsmotors verbunden.

Das Spannungswellengetriebe weist einen Dynamic Spline 13 und einen Circular Spline 14 auf. Der Dynamic Spline 13 und der Circular Spline 14 sind als innenverzahnte Hohlräder ausgebildet, die mit einem außenverzahnten Flexspline 15 in Zahneingriff stehen. Der Circular Spline 14 bildet den ersten Getriebeantrieb 6, während der Dynamic Spline drehfest mit dem Getriebeabtrieb 11 verbunden ist. Radial innerhalb des Flexsplines 15 ist ein elliptischer Wellengenerator 16 mittels eines radialflexiblen Lagers 17 rotierbar gelagert, der den zweiten Getriebeantrieb 18 bildet. An den zweiten Getriebeantrieb 7 ist die Abtriebswelle 19 eines (nicht weiter dargestellten) elektrischen Antriebsmotors angekoppelt.

Der erste Getriebeantrieb 6 weist zwei axial voneinander beabstandete Ankoppelaufnahmen 9, 10, nämlich eine erste Ankoppelaufnahme 9 und eine zweite Ankoppelaufnahme 10, auf. Das Zugmittelrad 3 kann beispielsweise mittels Schweißverbindungen 20 wahlweise in der ersten Ankoppelaufnahme 9 drehfest mit dem ersten Getriebeantrieb 6 verbunden sein, was in der Figur mit durchgezogenen Linien dargestellt ist, oder in der zweiten Ankoppelaufnahme 10, was in der Figur mit gestrichelten Linien dargestellt ist.

Wenn das Zugmittelrad 3 in der ersten Ankoppelaufnahme 9 angeordnet ist, befindet sich die axiale Zugmittelradposition in einer ersten axiale Ebene 28. Wenn das Zugmittelrad 3 in der zweiten Ankoppelaufnahme 10 angeordnet ist, befindet sich die axiale Zugmittelradposition in einer zweiten axiale Ebene 29, die von der ersten axiale Ebene 28 axial beabstandet ist.

Zur axialen Sicherung des Dynamic Spline 13 ist ein in eine umlaufende Nut des Circular Splines 14 eingefügter Sicherungsring 21 vorhanden. Außerdem ist der Circular Spline 14 gemeinsam einstückig mit einer Wandung 22 ausgebildet, die zusammen mit dem Getriebeabtrieb 11 eine Axialsicherung für den Flexspline 15 bildet.

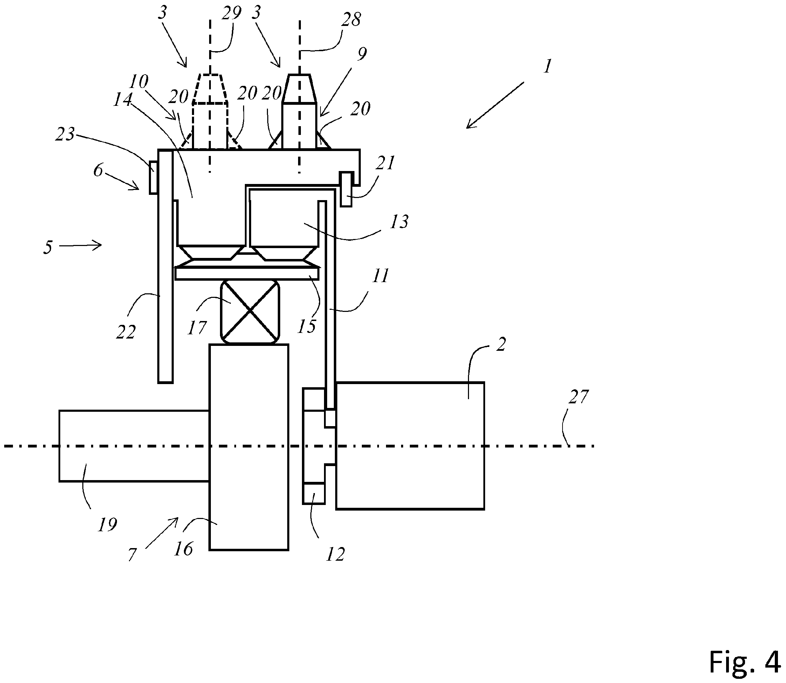

Figur 4 zeigt ein drittes Ausführungsbeispiel einer erfindungsgemäßen Verstellvorrichtung 1. Das dritte Ausführungsbeispiel unterscheidet sich von dem zweiten Ausführungsbeispiel dadurch, dass die Wandung 22 nicht gemeinsam einstückig mit dem Circular Spline 14 ausgebildet ist, sondern mittels einer Befestigungsschraube 23 an diesem angeschraubt ist. Alternativ oder zusätzlich wäre auch eine Befestigung durch Stoffschluss und/oder Reibschluss möglich. Insbesondere ist beispielsweise auch eine Verbindung durch Nieten, Schweißen oder unter Zuhilfenahme von Sicherungsringen möglich.

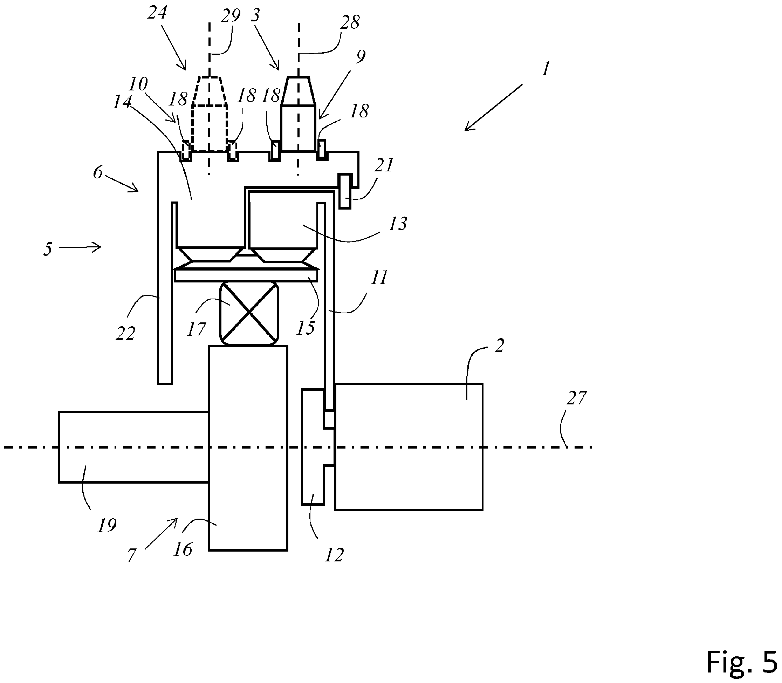

Figur 5 zeigt ein viertes Ausführungsbeispiel einer erfindungsgemäßen Verstellvorrichtung 1. Das vierte Ausführungsbeispiel unterscheidet sich von dem zweiten Ausführungsbeispiel dadurch, dass das Zugmittelrad 3 nicht mittels Schweißverbindungen mit dem ersten Getriebeantrieb 6 verbunden wird. Vielmehr ist vorgesehen, dass eine drehfeste Halterung des Zugmittelrades 3 mittels einer Formschlussverbindung erfolgt. Hierzu kann das Zugmittelrad 3 beispielsweise eine (nicht dargestellte) Innenverzahnung aufweisen, die in eine entsprechend komplementäre Außenverzahnung des ersten Getriebeantriebs 6 eingreift. Zur Axialsicherung des Zugmittelrades 3 sind Sicherungsringe 18 in umlaufende Nuten eingelassen.

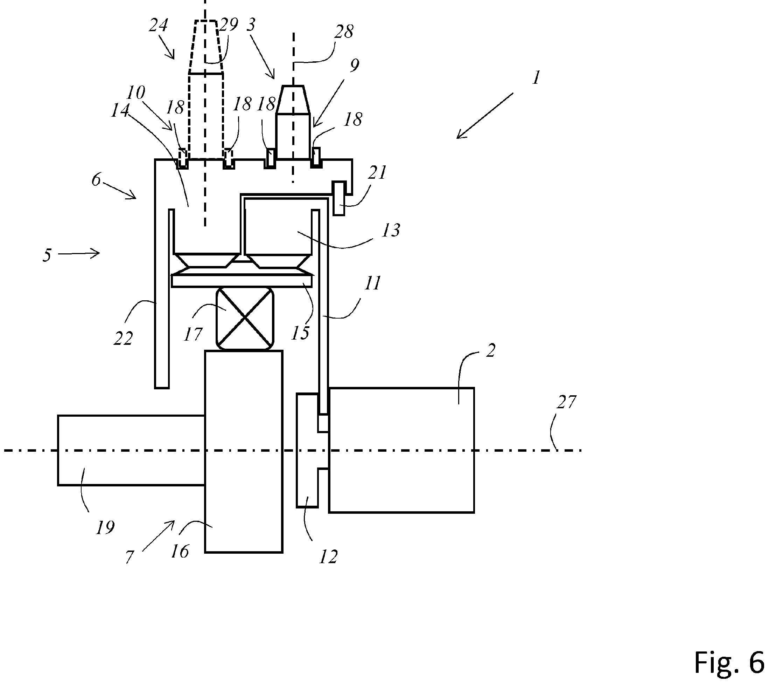

Figur 6 zeigt ein fünftes Ausführungsbeispiel einer erfindungsgemäßen Verstellvorrichtung 1. Das fünfte Ausführungsbeispiel unterscheidet sich von dem vierten Ausführungsbeispiel dadurch, dass ein weiteres Zugmittelrad 24 vorhanden ist, das von dem Zugmittelrad 3 verschieden ist. Das weitere Zugmittelrad 24 weist einen anderen Durchmesser auf, als das Zugmittelrad 3. Das weitere Zugmittelrad 24 kann anstelle des Zugmittelrades 3 in einer der axial voneinander beabstandeten Ankoppelaufnahmen 9, 10 angeordnet werden.

In einer Variante könnte der erste Getriebeantrieb 6 ausschließlich eine einzige Ankoppelaufnahme 9 aufweisen, wobei jedoch eine Flexibilität hinsichtlich der axialen Zugmittelradposition durch die wahlweise Verwendbarkeit entweder das Zugmittelrades 23 oder des weiteren Zugmittelrades 24 gegeben ist.

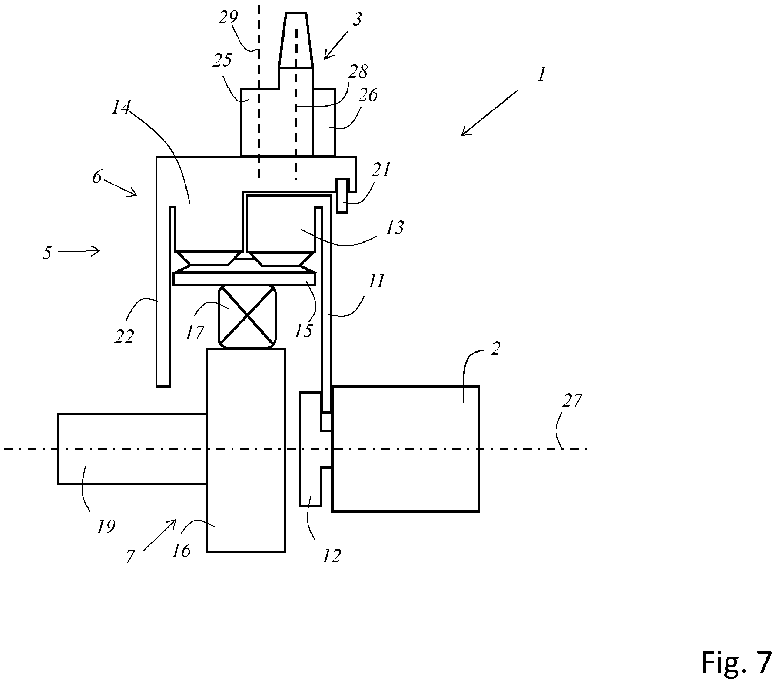

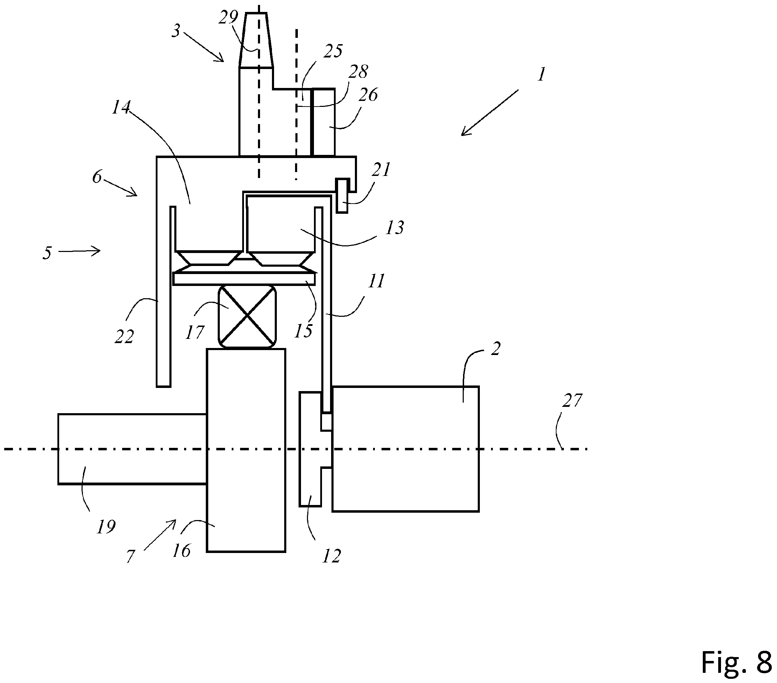

Die Figuren 7 und 8 zeigen ein sechstes Ausführungsbeispiel einer erfindungsgemäßen Verstellvorrichtung 1. Bei diesem Ausführungsbeispiel ist das Zugmittelrad 3 asymmetrisch ausgebildet und kann zum Realisieren einer von wenigstens zwei unterschiedlichen, möglichen axialen Zugmittelradpositionen wahlweise mit einer ersten Ausrichtung (dargestellt in Figur 7) relativ zu dem ersten Getriebeantrieb 6 oder mit einer von der ersten Ausrichtung verschiedenen zweiten Ausrichtung (dargestellt in Figur 8) relativ zu dem ersten Getriebeantrieb 6 drehfest mit dem ersten Getriebeantrieb 6 verbunden werden.

Wenn das Zugmittelrad 3 mit der ersten Ausrichtung (dargestellt in Figur 7) relativ zu dem ersten Getriebeantrieb 6 relativ zu dem ersten Getriebeantrieb 6 drehfest mit dem ersten Getriebeantrieb 6 verbunden ist, befindet sich die axiale Zugmittelradposition in einer ersten axiale Ebene 28. Wenn das Zugmittelrad 3 mit der zweiten Ausrichtung (dargestellt in Figur 8) relativ zu dem ersten Getriebeantrieb 6 relativ zu dem ersten Getriebeantrieb 6 drehfest mit dem ersten Getriebeantrieb 6 verbunden ist, befindet sich die axiale Zugmittelradposition in einer zweiten axiale Ebene 29, die von der ersten axiale Ebene 28 axial beabstandet ist.

Das Zugmittelrad 3 ist als außenverzahnte Scheibe ausgebildet, die auf einer Seite einen Bund 25 aufweist und die axial an einem radial hervorstehenden Anschlag 26 des ersten Getriebeantrieb 6 anliegend befestigt wird. Je nachdem, ob das Zugmittelrad mit der Bundseite oder mit der bundfreien Seite an dem Anschlag 26 anliegend befestigt wird, resultiert eine unterschiedliche axiale Zugmittelradposition.

Hinsichtlich der Befestigung des Zugmittelrades 3 gibt es unterschiedliche Möglichkeiten, die auch kombiniert realisiert werden können. Grundsätzlich ist eine Stoffschlussverbindung (beispielsweise durch Schweißen oder Löten), eine Formschlussverbindung (beispielsweise durch Schrauben, Nieten oder eine Steckverbindung) und/oder einer Reibschlussverbindung (beispielsweise durch eine Presspassung) möglich.

### Bezugszeichenliste:

- 1: Verstellvorrichtung
- 2: Nockenwelle
- 3: Zugmittelrad
- 4: Kettenrad
- 5: Dreiwellengetriebe
- 6: Erster Getriebeantrieb
- 7: Zweiter Getriebeantrieb
- 8: elektrischer Antriebsmotor
- 9: Ankoppelaufnahme
- 10: Ankoppelaufnahme
- 11: Getriebeabtrieb
- 12: Befestigungsschraube
- 13: Dynamic Spline
- 14: Circular Spline
- 15: Flexspline
- 16: Wellengenerator
- 17: radialflexibles Lager
- 18: Sicherungsring
- 19: Abtriebswelle
- 20: Schweißverbindung
- 21: Sicherungsring
- 22: Wandung
- 23: Befestigungsschraube
- 24: Weiteres Zugmittelrad
- 25: Bund
- 26: Anschlag
- 27: axiale Mittelachse
- 28: erste axiale Ebene
- 29: zweite axiale Ebene

## Patentansprüche

1. Verfahren zum Herstellen einer Verstellvorrichtung (1) für einen Verbrennungsmotor, die ein Zugmittelrad (3) sowie ein Dreiwellengetriebe (5) mit einem ersten Getriebeantrieb (6), einem zweiten Getriebeantrieb (7) und einem Getriebeabtrieb (11) aufweist, **dadurch gekennzeichnet, dass**
a. das Zugmittelrad (3) wahlweise in einer von wenigstens zwei axial voneinander beabstandeten Ankoppelaufnahmen (9, 10) mit dem ersten Getriebeantrieb (6) drehfest verbunden wird, oder dass
b. das Zugmittelrad (3) derart asymmetrisch ausgebildet ist, dass in Abhängigkeit von seiner Einbau-Ausrichtung jeweils eine unterschiedliche axiale Zugmittelradposition erzielbar ist, und zum Realisieren einer von wenigstens zwei unterschiedlichen möglichen axialen Zugmittelradpositionen wahlweise mit einer ersten Ausrichtung relativ zu dem ersten Getriebeantrieb (6) oder mit einer von der ersten Ausrichtung verschiedenen zweiten Ausrichtung relativ zu dem ersten Getriebeantrieb (6) drehfest mit dem ersten Getriebeantrieb (11) verbunden wird, oder dass
c. ein weiteres Zugmittelrad vorhanden ist, das von dem Zugmittelrad (3) verschieden ist, wobei zum Realisieren einer von wenigstens zwei unterschiedlichen möglichen axialen Zugmittelradpositionen wahlweise das Zugmittelrad (3) oder das weitere Zugmittelrad mit dem ersten Getriebeantrieb drehfest verbunden wird oder wobei wahlweise das Zugmittelrad (3) oder das weitere Zugmittelrad in einer Ankoppelaufnahme (9, 10) oder in einer von wenigstens zwei axial voneinander beabstandeten Ankoppelaufnahmen (9, 10) mit dem ersten Getriebeantrieb (6) drehfest verbunden wird.

2. Verfahren nach Anspruch 1, **dadurch gekennzeichnet, dass**
a. das Zugmittelrad (3) als Teil eines Zugmittelgetriebes ausgebildet ist, und/oder dass
b. das Zugmittelrad (3) als Kettenrad oder als Riemenrad oder als Zahnriemenrad ausgebildet ist

3. Verfahren nach Anspruch 1 oder 2, **dadurch gekennzeichnet, dass**
a. das Zugmittelrad (3) mittels wenigstens einer Schraubverbindung drehfest mit dem ersten Getriebeantrieb (6) verbunden wird, oder dass
b. das Zugmittelrad (3) mittels wenigstens einer Formschlussverbindung, insbesondere mittels einer Steckverbindung, drehfest mit dem ersten Getriebeantrieb (6) verbunden wird, oder dass
c. das Zugmittelrad (3) mittels wenigstens einer Stoffschlussverbindung drehfest mit dem ersten Getriebeantrieb (6) verbunden wird.

4. Verfahren nach einem der Ansprüche 1 bis 3, **dadurch gekennzeichnet, dass** der erste Getriebeabtrieb (6) wenigstens einen Flansch, insbesondere einen Flansch mit Gewindebohrungen, aufweist, an dem das Zugmittelrad (3) festgelegt wird.

5. Verfahren nach einem der Ansprüche 1 bis 4, **dadurch gekennzeichnet, dass**
a. das Dreiwellengetriebe (5) als Spannungswellengetriebe ausgebildet ist, oder dass
b. das Dreiwellengetriebe (5) als Spannungswellengetriebe ausgebildet ist, wobei ein Dynamic Spline oder ein Circular Spline den ersten Getriebeantrieb (6) bildet.

6. Verfahren nach einem der Ansprüche 1 bis 5, **dadurch gekennzeichnet, dass** an den zweiten Getriebeantrieb (7) die Abtriebswelle (19) eines, insbesondere elektrischen, Antriebsmotors angekoppelt wird.

7. Verstellvorrichtung (1) für einen Verbrennungsmotor, die ein Zugmittelrad (3) sowie ein Dreiwellengetriebe (5) mit einem ersten Getriebeantrieb (6), einem zweiten Getriebeantrieb (7) und einem Getriebeabtrieb (11) aufweist, **dadurch gekennzeichnet, dass**
a. erste Getriebeantrieb (6) wenigstens zwei axial voneinander beabstandeten Ankoppelaufnahmen (9, 10) aufweist, wobei das Zugmittelrad (3) wahlweise in einer von den Ankoppelaufnahmen (9, 10) mit dem ersten Getriebeantrieb (6) drehfest verbindbar ist oder verbunden ist, oder dass
b. das Zugmittelrad (3) asymmetrisch ausgebildet ist und zum Realisieren einer von wenigstens zwei unterschiedlichen möglichen axialen Zugmittelradpositionen wahlweise mit einer ersten Ausrichtung relativ zu dem ersten Getriebeantrieb (6) oder mit einer von der ersten Ausrichtung verschiedenen zweiten Ausrichtung relativ zu dem ersten Getriebeantrieb (6) drehfest mit dem ersten Getriebeantrieb (6) verbindbar ist, oder dass
c. ein weiteres Zugmittelrad vorhanden ist, das von dem Zugmittelrad (3) verschieden ist, wobei zum Realisieren einer von wenigstens zwei unterschiedlichen möglichen axialen Zugmittelradpositionen wahlweise das Zugmittelrad (3) oder das weitere Zugmittelrad mit dem ersten Getriebeantrieb (6) drehfest verbindbar ist oder verbunden ist, oder wobei wahlweise das Zugmittelrad (3) oder das weitere Zugmittelrad in einer Ankoppelaufnahme (9, 10) oder in einer von wenigstens zwei axial voneinander beabstandeten Ankoppelaufnahmen (9, 10) mit dem ersten Getriebeantrieb (6) drehfest verbindbar ist oder verbunden ist.

8. Verstellvorrichtung (1) nach Anspruch 7, **dadurch gekennzeichnet, dass**
a. das Zugmittelrad (3) als Teil eines Zugmittelgetriebes ausgebildet ist, und/oder dass
b. das Zugmittelrad (3) als Kettenrad oder als Riemenrad oder als Zahnriemenrad ausgebildet ist

9. Verstellvorrichtung (1) nach Anspruch 7 oder 8, **dadurch gekennzeichnet, dass**
a. das Zugmittelrad (3) mittels wenigstens einer Schraubverbindung drehfest mit dem ersten Getriebeantrieb (6) verbindbar ist oder verbunden ist, oder dass
b. das Zugmittelrad (3) mittels wenigstens einer Formschlussverbindung, insbesondere mittels einer Steckverbindung, drehfest mit dem ersten Getriebeantrieb (6) verbindbar ist oder verbunden ist, oder dass
c. das Zugmittelrad (3) mittels wenigstens einer Stoffschlussverbindung drehfest mit dem ersten Getriebeantrieb (6) verbindbar ist oder verbunden ist.

10. Verstellvorrichtung (1) nach einem der Ansprüche 7 bis 9, **dadurch gekennzeichnet, dass** der erste Getriebeabtrieb (6) wenigstens einen Flansch, insbesondere einen Flansch mit Gewindebohrungen, aufweist, an dem das Zugmittelrad (3) festlegbar ist oder festgelegt ist.

11. Verstellvorrichtung (1) nach einem der Ansprüche 7 bis 10, **dadurch gekennzeichnet, dass**
a. das Dreiwellengetriebe (5) als Spannungswellengetriebe ausgebildet ist, oder dass
b. das Dreiwellengetriebe (5) als Spannungswellengetriebe ausgebildet ist, wobei ein Dynamic Spline oder ein Circular Spline den ersten Getriebeantrieb bildet.

12. Verstellvorrichtung (1) nach einem der Ansprüche 7 bis 11, **dadurch gekennzeichnet, dass** an den zweiten Getriebeantrieb (7) die Abtriebswelle (19) eines, insbesondere elektrischen, Antriebsmotors angekoppelt ist.

13. Nockenwellenversteller für einen Verbrennungsmotor, **gekennzeichnet durch** eine Verstellvorrichtung (1) nach einem der Ansprüche 7 bis 12.

14. Vorrichtung zum Einstellen des Expansionshubes und/oder des Verdichtungsverhältnisses eines Verbrennungsmotors, **gekennzeichnet durch** eine Verstellvorrichtung (1) nach einem der Ansprüche 7 bis 12.

15. Verbrennungsmotor, der eine Verstellvorrichtung (1) nach einem der Ansprüche 7 bis 12 aufweist.
